# EUROPEAN PATENT SPECIFICATION

(11) **EP 2 897 914 B1**
(45) Date of publication and mention of the grant of the patent: **05.04.2017**
(21) Application number: 13792428.8
(22) Date of filing: 24.09.2013
(51) Int. Cl.: C02F 9/08, C02F 1/20, C02F 1/28, C02F 1/42, C02F 1/70, C02F 1/72

(54) **TREATMENT METHOD AND PLANT FOR PETROLEUM REFINERY PROCESS EFFLUENTS**
BEHANDLUNGSVERFAHREN UND ANLAGE FÜR PROZESSABWÄSSER EINER ERDÖLRAFFINERIE
PROCÉDÉ ET USINE DE TRAITEMENT D'EFFLUENTS DE RAFFINERIES DE PÉTROLE

(30) Priority: 24.09.2012 IT VE20120035
(43) Date of publication of application: 29.07.2015
(73) Proprietor: BERNARDINELLO ENGINEERING S.P.A., 35010 CADONEGHE (IT)
(72) Inventor: NICOLAZZI, Federico, I-35010 Cadoneghe (IT)
(74) Representative: Piovesana, Paolo
(86) International application number: PCT/IB2013/002109
(87) International publication number: WO 2014/045109

(56) References cited:
- US-A- 4 915 928
- US-A- 6 071 413
- US-A1- 2005 079 114
- US-B1- 6 843 920

## Description

The present invention relates to a treatment method and a treatment plant for petroleum refinery process effluents.

In petroleum refineries, pretreatment plants are known for the water originating from processes and containing harmful and toxic substances. These pretreatment plants are known as SWS (Sour Water Strippers), consisting essentially of steam stripping systems. The water from these is generally mixed with the other discharge water from the refinery and fed to effluent treatment.

This water originating from SWS, generally at a temperature between 50°C and 90°C, contains numerous substances (in particular phenols, cyanides, substituted amines, ammonia, sulphides, etc.) toxic for the bacterial load contained in effluent treatment plants, and also contain substances (for example selenium) which cannot be treated by said plants, and therefore reach the receiving waters.

It is known to use water originating from SWS for desalination treatment of refinery crude. This represents a use, on termination of which the water is mixed with other refinery discharge waters and sent to effluent treatment.

A drawback of known treatment methods for water originating from SWS is the presence therein of contaminants which cause disturbances to the biological plant, as they are toxic for the bacterial loads.

Another drawback is the presence in the SWS water of parameters which, under certain conditions (for example on sudden concentration
changes) can preclude the operability of the effluent treatment plant, in particular of the biological plant.

Another drawback is the considerable loss of good quality water which could be easily recovered.

Another drawback is the presence in the discharge water of contaminants which the effluent treatment plant, and in particular of the biological plant, are unable to treat or at most only insufficiently treat.

US 2005/0079114 describes a method for removing selenium from water from SWS. In this method a specific filter for selenium is required and is essential since it removes the greatest part of the selenium. Moreover, when the strong anionic resin is used, this latter alone removes not more than 25% of selenium and the total removal obtained by the combination of said filter with the strong anionic resin is never more than 90%.

An object of the invention is to propose a treatment method for the water originating from SWS of a refinery, able to overcome all the aforesaid drawbacks.

A particular object of the invention is to propose a treatment method for the water originating from SWS, able to separate from the effluent all the contaminants present and to recover hot demineralized water.

Another object of the invention is to propose a plant for implementing the method.

These objects and others which will be apparent from the ensuing description are attained, according to the invention, by a treatment method for petroleum refinery process effluents, in accordance with claim 1.

Again according to the invention, the method can be implemented in a plant in accordance with claim 3.

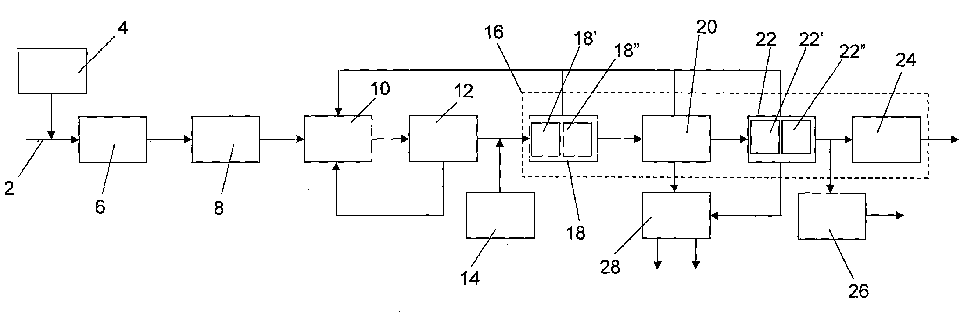

The present invention is further clarified hereinafter with reference to a preferred embodiment thereof, provided with reference to the accompanying drawing, showing a block diagram of the method of the invention.

As can be seen from the drawing, the method according to the invention is applicable to effluents from SWS units of a petroleum refinery, and comprises a series of essential steps which, depending on the actual case, can be integrated with preferential steps intended to adapt the method to different characteristics of the effluent to be treated, this latter being related to the refinery itself and more particularly to the type of crudes treated and to the refinery plant characteristics.

An oxidant 4 (sodium hypochlorite, calcium hypochlorite, hydrogen peroxide, potassium permanganate, chlorine dioxide, chlorine gas, ozone and its derivatives) is added to the effluent to be treated 2, originating under pressure from SWS, generally at a temperature between 50 and 90°C, in order to oxidize a part of the organic and inorganic substances contained in the effluent, with the double advantage of removing certain inorganic substances and of reducing the COD due to the organic substances. Although not essential, this step of adding an oxidant to the effluent, in any event appears advantageous in the light of the aforegoing.

The effluent, possibly with added oxidant, is then subjected to mechanical filtration in a physical filter 6 (of self-cleaning sand type) and is then cooled in a heat exchanger 8 with demineralized water, advantageously consisting, as will be more apparent hereinafter, of the same demineralized water as obtained with the method according to the invention. The cooling step is advantageously carried out for the double purpose of recovering usable heat and of making its temperature compatible with the technology used in the downstream treatment steps. In particular, in the subsequent decarbonation steps with gas-permeable membranes, the maximum allowable temperature for the effluent should not exceed 45°C and preferably 35°C. In an alternative embodiment, the invention comprises oxidizing the effluent after the cooling step instead of before the filtration step.

The effluent is then stored in a tank 10 or in a basin of such capacity as to enable the water partially treated by the downstream section to be recovered. This is because some of the subsequent sections of the plant involve steps in which water is produced of a quality not always satisfying specifications. In this case the tank enables this water to be stored and be treated instead of being discharged.

The oxidized stored effluent is then fed to a bank of filters 12 containing an adsorbent substance (activated carbon, anthracite, adsorbent polymers) able to remove traces of organic substances of large dimensions or which are harmful to the technologies applied in the downstream sections.

Downstream of the adsorbent, a reducing substance 14 (sodium bisulphite, sulphites, hydrogen sulphide, etc.) can be advantageously added
to neutralize any residual oxidant. More particularly, the addition of the reducing substance is related to the type of adsorbent substance used: if a reducing adsorbent substance is used (activated carbon or anthracite) there is no point in adding further reducing substance, whereas if a non-reducing adsorbent substance is used (adsorbent polymers) the reducing substance has necessary to be added.

The wash water of the adsorbent filters 12 is then fed to the storage tank 10 for subsequent reprocessing.

Downstream of this pretreatment step an ion exchange demineralization step is provided. The step of total demineralization of the effluent comprises decationization with at least one ion exchange resin, subsequent decarbonation step that takes place by degassing over gas permeable membranes, and deanionization with at least two ion exchange resins, of which one is weak and one is strong.

This is carried out in a demineralization unit 16, itself comprising a decationization unit with at least one ion exchange resin, a decarbonation unit with a degassing section comprising gas-permeable membranes, and a deanionization unit with at least two ion exchange resins, of which one is weak and one is strong. More particularly, the demineralization unit 16 comprises four successive sections:
- a decationization unit 18,
- a degassing section 20,
- a deanionization unit 22,
- a refining (polishing) section 24.

The decationization unit 18 comprises two series-connected cationic units 18', 18" which can contain, depending on the effluent to be treated, either two separate resins or the same resin.

If the two cationic units 18', 18" contain two different resins, the first unit 18' contains weak or strong microporous or gelular cationic resins, while the second unit 18" contains strong microporous or gelular cationic resins. In any event, resin regeneration is provided, which takes place in the reverse direction to the working direction (counter-current), i.e. first in the second unit 18" and then in the first 18'.

The two cationic units 18' and 18" can be physically separated and be connected together by pipes, or can be installed in the same column, and the resin regeneration be carried out with hydrochloric acid, sulphuric acid or nitric acid, at choice.

The eluate obtained from the resin regeneration is separated into fractions on the basis of the residual conductivity and, depending on the specific characteristics, can be fed for recovery to the tank 10 and then reprocessed, or to disposal as such, or to subsequent concentration in an evaporator/concentrator 26.

The purpose of the degassing section 20 of the ion exchange demineralization unit 16 is to remove the volatile substances which could form an ionic load to be treated in the next steps. In particular the degassing section 20 consist of gas permeable membranes. The stripped air can be after-treated, for safety reasons, before being fed to atmosphere. The aftertreatment consists preferably of removal by means of a scrubber 28 using an alkaline substance, for example sodium hydroxide. The scrubber 28 can be advantageously fed with an alkaline substance, for example sodium hydroxide, which is either fresh or is obtained by regeneration from the anionic section 22 of the demineralization unit 16.

The deanionization unit 22 comprises two separate anionic units 22', 22", which contains two separate resins. The first unit 22' contains weak microporous or gelular anionic resin, while the second unit 22" contains strong microporous or gelular anionic resin.

Again in this case, as in the case of the decationization unit 18, resin generation takes place in the reverse direction to the working direction (counter-current), i.e. first in the second unit 22" and then in the first 22'. Moreover the two units 22' and 22" can be physically separated and be connected together by pipes, or be installed in the same column.

Regeneration can be carried out independently with sodium hydroxide, with potassium hydroxide, or with ammonia.

The eluate obtained from the resin regeneration is separated into fractions on the basis of the residual conductivity and, depending on the specific characteristics, can be fed to recovery in the tank 10 and then reprocessed, or to disposal as such, or to subsequent concentration in an evaporator/crystallizer 26.

The purpose of the refining section 24 of the ion exchange demineralization unit 12 is to form a final barrier in the treatment chain, able to ensure that all parameters fall within the scheduled limits. In particular the conductivity, and the silica, selenium, arsenic and vanadium contents are monitored.

This refining section 24 can consist of a mixed bed ion exchange unit, or of a selective unit or a combination of the two.

The mixed bed unit consists of a mixture of cationic ion exchange resins mixed in adequate proportions with anionic resins. Before carrying out regeneration of the resins, these are separated from each other by utilizing their different densities and are then traversed by acid and alkaline solutions exactly in the same manner as the resins of the upstream section.

The selective unit is used in particular for removing selenium, arsenic and vanadium, and uses materials able to fix these substances selectively by means of active sites present in the materials themselves. In particular, activated manganese dioxide of natural origin (pirolusite) can be used, or one of the materials known as GFH (granulated ferric hydroxide) or GEH (commercial name) can be used.

With an experimental plant constructed and used in accordance with the principles of the present invention, the following results were obtained:
- production of demineralized water from SWS effluents 92-97%; the demineralized water can then be used to extract heat from the effluent originating from the SWS;
- ammonia and selenium removal > 99%;
- segregation and recovery ammoniacal eluates > 98%;
- reduction of organic load (COD) > 90%;
- low plant and running cost.

Essentially the present invention is based on a principle which is totally different from that on which US 2005/0079114 is based and is such as to effect preliminary removal of sulphates (and other strong anions) from the SWS effluents, hence preventing the selenates competing with these anions, in order to obtain higher percentage removal of selenium (>99%) without requiring any specific filter for the selenium.

By virtue of the invention the following objectives can be achieved:
- recovery of residual heat for heating the demineralized water produced or already stored in a final tank;
- separating of certain organic substances (containing or not containing nitrogen) in the adsorption unit;
- separation of ammonium and amine cations and their segration in an acid concentrate;
- separation of selenium, vanadium and arsenic anions, of a part of the COD and of the organic nitrogen, and their segration in an akaline concentrate;
- concentration of one or more solutions to obtain a solid disposable in accordance with law;
- production of demineralized water with characteristics compatible with industrial boiler feed.

## Claims

1. A treatment method for petroleum refinery process effluents originating from sour water strippers, comprising the following steps in sequence:
- mechanical filtration of effluent originating from sour water strippers,
- cooling the effluent with demineralized water in a heat exchanger,
- adsorption of the organic substances present in the effluent and potentially harmful for the technologies applied in the subsequent steps,
**characterised by** also comprising a step of total demineralization of the effluent comprising in sequence a decationization with at least one ion exchange resin, a subsequent decarbonation step which takes place by degassing over gas-permeable membranes, and a deanionization with at least two ion exchange resins, of which one is weak and one is strong, wherein the cooling step is such that in the decarbonation step the temperature of the effluent does not exceed 45°C.

2. A method as claimed in claim 1, **characterised:**
- **by** further subjecting the effluent already subjected to deanionization to a passage in a final refining section (24) and,
- by subjecting to regeneration the cationic resins contained in the decationization unit (18) and the anionic resins contained in the deanionization unit (22), the eluate obtained from said regeneration then being subjected to concentration before disposal.

3. A treatment plant for petroleum refinery process effluents originating from sour water strippers, comprising:
- a mechanical filter (6) for the effluent originating from sour water strippers,
- a cooling unit (8), downstream of said mechanical filter (6), for cooling the effluent with demineralized water in a heat exchanger,
- an adsorption unit (12), downstream of said cooling unit (8), for the organic substances present in the effluent,
**characterised by** also comprising, downstream of said adsorption unit (12), a demineralization unit (16), itself comprising in sequence a decationization unit (18) with at least one ion exchange resin, a decarbonation unit which is a degassing section (20) comprising gas-permeable membranes, and a deanionization unit (22) with at least two ion exchange resins, of which one is weak and one is strong, wherein the cooling unit is configured so that the temperature of the effluent does not exceed 45°C in the degassing section.

4. A plant as claimed in claim 3, **characterised by** comprising, upstream of said mechanical filter (6), or downstream of said cooling unit (8), means for adding oxidant (4).

5. A plant as claimed in one or more of the claims from 3 to 4, **characterised in that** said adsorption unit comprises a bank of filters (12) containing an adsorbent substance.

6. A plant as claimed in one or more of the claims from 3 to 5, **characterised by** comprising, within the plant itself, means for reprocessing the wash water of said filters (12).

7. A plant as claimed in one or more of the claims from 3 to 6, **characterised in that** said demineralization unit (16) further comprises a final refining section (24).

8. A plant as claimed in one or more of the claims from 3 to 7, **characterised in that** said decationization unit (18) comprises two cationic units (18', 18") connected in series and each containing a resin and/or **in that** said deanionization unit (22) comprises two anionic units (22', 22") connected in series and each containing a resin.

9. A plant as claimed in claim 8, **characterised in that** one cationic unit (18') contains a weak or strong microporous or gelular cationic resin while the other cationic unit (18") contains strong microporous or gelular cationic resin, and/or **characterized in that** one anionic unit (22') contains a weak microporous or gelular anionic resin, while the other anionic unit (22") contains strong microporous or gelular anionic resin.

10. A plant as claimed in one or more of the claims from 3 to 9, **characterised in that** said deanionization unit (22) comprises two separate anionic units (22', 22"), which contain two separate resins, and **in that** the first anionic unit (22') contains weak anionic resin, while the second unit (22") contains strong anionic resin.

11. A plant as claimed in one or more of the claims from 3 to 10, **characterised by** comprising, downstream of the decarbonation unit (20), a scrubber (28) using an alkaline substance.

12. A plant as claimed in one or more of the claims from 3 to 11, **characterised in that** said refining section (24) comprises at least one from a unit consisting a mixture of cationic ion exchange resin with anionic ion exchange resin, and a unit consisting of materials having active sites able to selectively fix the substances to be removed.

13. A plant as claimed in one or more of the claims from 3 to 12, **characterised by** comprising an evaporator/crystallizer (26), downstream of said decationization unit (18) and/or deanionization unit (22), for evaporating/crystallizing the eluate obtained from the resin regeneration.

14. A plant as claimed in one or more of the claims from 3 to 13, **characterised by** comprising a storage tank (10) downstream of said cooling unit (8), and/or of said adsorption unit (12), and/or of one of the sections (18, 20, 22, 24) of the demineralization unit (16).

## Patentansprüche

1. Behandlungsverfahren für Prozessabwässer aus einer Erdölraffinerie, die aus Sauerwasserstrippern stammen, umfassend die folgenden Schritte nacheinander:
- mechanische Filtration von Abwasser, das aus Sauerwasserstrippern stammt,
- Kühlen des Abwassers mit entmineralisiertem Wasser in einem Wärmetauscher,
- Adsorption der in dem Abwasser vorhandenen und für die in den anschließenden Schritten angewendeten Technologien möglicherweise schädlichen organischen Stoffe,
**dadurch gekennzeichnet, dass** es auch einen Schritt der vollständigen Entmineralisierung des Abwassers umfasst, umfassend nacheinander eine Entkationisierung mit mindestens einem Ionenaustauschharz, einen anschließenden Entkarbonisierungsschritt, der durch Entgasen durch gasdurchlässige Membranen stattfindet, und eine Entanionisierung mit mindestens zwei Ionenaustauschharzen, von denen eines schwach und das andere stark ist, wobei der Kühlungsschritt derart ist, dass die Temperatur des Abwassers in dem Entkarbonisierungsschritt 45 °C nicht übersteigt.

2. Verfahren nach Anspruch 1, **dadurch gekennzeichnet, dass**:
- das Abwasser, das bereits einer Entanionisierung unterzogen worden ist, ferner einer Passage in einem Raffinerie-Endabschnitt (24) unterzogen wird und
- die kationischen Harze, die in der Entkationisierungseinheit (18) enthalten sind, und die anionischen Harze, die in der Entanionisierungseinheit (22) enthalten sind, einer Regeneration unterzogen werden, wobei das aus der Regeneration erhaltene Eluat dann vor der Entsorgung einer Einengung unterzogen wird.

3. Behandlungsanlage für Prozessabwässer aus einer Erdölraffinerie, die aus Sauerwasserstrippern stammen, umfassend:
- einen mechanischen Filter (6) für das Abwasser, das aus Sauerwasserstrippern stammt,
- eine Kühlungseinheit (8), die dem mechanischen Filter (6) nachgeschaltet ist, zum Kühlen des Abwassers mit entmineralisiertem Wasser in einem Wärmetauscher,
- eine Adsorptionseinheit (12), die der Kühlungseinheit (8) nachgeschaltet ist, für die in dem Abwasser vorhandenen organischen Stoffe,
**dadurch gekennzeichnet, dass** sie auch, nachgeschaltet zu der Adsorptionseinheit (12), eine Entmineralisierungseinheit (16) umfasst, die ihrerseits nacheinander eine Entkationisierungseinheit (18) mit mindestens einem Ionenaustauschharz, eine Entkarbonisierungseinheit, bei der es sich um einen Entgasungsabschnitt (20) handelt, der gasdurchlässige Membranen umfasst, und eine Entanionisierungseinheit (22) mit mindestens zwei Ionenaustauschharzen umfasst, von denen eines schwach und das andere stark ist, wobei die Kühlungseinheit derart konfiguriert ist, dass die Temperatur des Abwassers in dem Entgasungsabschnitt 45 °C nicht übersteigt.

4. Anlage nach Anspruch 3, **dadurch gekennzeichnet, dass** sie, vorgeschaltet zu dem mechanischen Filter (6) oder nachgeschaltet zu der Kühlungseinheit (8), Mittel zum Zugeben eines Oxidationsmittels (4) umfasst.

5. Anlage nach einem oder mehreren der Ansprüche 3 bis 4, **dadurch gekennzeichnet, dass** die Adsorptionseinheit eine Bank von Filtern (12) umfasst, welche einen adsorbierenden Stoff enthalten.

6. Anlage nach einem oder mehreren der Ansprüche 3 bis 5, **dadurch gekennzeichnet, dass** sie in der Anlage selbst Mittel zum Wiederaufbereiten des Waschwassers der Filter (12) umfasst.

7. Anlage nach einem oder mehreren der Ansprüche 3 bis 6, **dadurch gekennzeichnet, dass** die Entmineralisierungseinheit (16) ferner einen Raffinerie-Endabschnitt (24) umfasst.

8. Anlage nach einem oder mehreren der Ansprüche 3 bis 7, **dadurch gekennzeichnet, dass** die Entkationisierungseinheit (18) zwei kationische Einheiten (18', 18") umfasst, die in Reihe geschaltet sind und jeweils ein Harz enthalten, und/oder dadurch, dass die Entanionisierungseinheit (22) zwei anionische Einheiten (22', 22") umfasst, die in Reihe geschaltet sind und jeweils ein Harz enthalten.

9. Anlage nach Anspruch 8, **dadurch gekennzeichnet, dass** eine kationische Einheit (18') ein schwaches oder starkes mikroporöses oder gelartiges kationisches Harz enthält, während die andere kationische Einheit (18") ein starkes mikroporöses oder gelartiges kationisches Harz enthält, und/oder **dadurch gekennzeichnet, dass** eine anionische Einheit (22') ein schwaches mikroporöses oder gelartiges anionisches Harz enthält, während die andere anionische Einheit (22") ein starkes mikroporöses oder gelartiges anionisches Harz enthält.

10. Anlage nach einem oder mehreren der Ansprüche 3 bis 9, **dadurch gekennzeichnet, dass** die Entanionisierungseinheit (22) zwei separate anionische Einheiten (22', 22") umfasst, die zwei separate Harze enthalten, und dadurch, dass die erste anionische Einheit (22') ein schwaches anionisches Harz enthält, während die zweite Einheit (22") ein starkes anionisches Harz enthält.

11. Anlage nach einem oder mehreren der Ansprüche 3 bis 10, **dadurch gekennzeichnet, dass** sie, nachgeschaltet zu der Entkarbonisierungseinheit (20), einen Gaswäscher (28) umfasst, bei dem ein alkalischer Stoff verwendet wird.

12. Anlage nach einem oder mehreren der Ansprüche 3 bis 11, **dadurch gekennzeichnet, dass** der Raffinerie-Abschnitt (24) eine Einheit umfasst, die ein Gemisch eines kationischen Ionenaustauschharzes und eines anionischen Ionenaustauschharzes enthält, und/oder eine Einheit, die aus Materialien besteht, welche aktive Stellen aufweisen, an denen die zu entfernenden Stoffe selektiv gebunden werden können.

13. Anlage nach einem oder mehreren der Ansprüche 3 bis 12, **dadurch gekennzeichnet, dass** sie, nachgeschaltet zu der Entkationisierungseinheit (18) und/oder der Entanionisierungseinheit (22), einen Verdampfer/Kristallisator (26) zum Verdampfen/Kristallisieren des aus der Harzregeneration erhaltenen Eluats umfasst.

14. Anlage nach einem oder mehreren der Ansprüche 3 bis 13, **dadurch gekennzeichnet, dass** sie, nachgeschaltet zu der Kühlungseinheit (8) und/oder der Adsorptionseinheit (12) und/oder einem der Abschnitte (18, 20, 22, 24) der Entmineralisierungseinheit (16) einen Lagerungstank (10) umfasst.

## Revendications

1. Procédé de traitement pour effluents de procédé de raffinerie de pétrole provenant d'épurateurs d'eaux acides, comprenant les étapes suivantes, séquentiellement :
- filtration mécanique de l'effluent provenant d'épurateurs d'eaux acides,
- refroidissement de l'effluent avec de l'eau déminéralisée dans un échangeur de chaleur,
- adsorption des substances organiques présentes dans l'effluent et potentiellement néfastes pour les technologies appliquées lors des étapes suivantes,
**caractérisé en ce qu'**il comprend également une étape de déminéralisation totale de l'effluent comprenant séquentiellement une décationisation avec au moins une résine échangeuse d'ions, une étape de décarbonatation subséquente qui est réalisée par dégazage sur des membranes perméables aux gaz, et une désanionisation avec au moins deux résines échangeuses d'ions, dont l'une est faible et l'autre est forte, l'étape de refroidissement étant telle que, lors de l'étape de décarbonatation, la température de l'effluent ne dépasse pas 45 °C.

2. Procédé tel que revendiqué dans la revendication 1, **caractérisé :**
- **par** la soumission complémentaire de l'effluent déjà soumis à une désanionisation à un passage dans une section de raffinage final (24) et
- par la soumission à une régénération des résines cationiques contenues dans l'unité de décationisation (18) et des résines anioniques contenues dans l'unité de désanionisation (22), l'éluat provenant de ladite régénération étant ensuite soumis à une concentration avant élimination.

3. Usine de traitement pour effluents de procédé de raffinerie de pétrole provenant d'épurateurs d'eaux acides, comprenant :
- un filtre mécanique (6) pour l'effluent provenant d'épurateurs d'eaux acides,
- une unité de refroidissement (8), en aval dudit filtre mécanique (6), pour refroidir l'effluent avec de l'eau déminéralisée dans un échangeur de chaleur,
- une unité d'adsorption (12), en aval de ladite unité de refroidissement (8), pour les substances organiques présentes dans l'effluent,
**caractérisée en ce qu'**elle contient également, en aval de ladite unité d'adsorption (12), une unité de déminéralisation (16), comprenant elle-même séquentiellement une unité de décationisation (18) avec au moins une résine échangeuse d'ions, une unité de décarbonatation qui est une unité de dégazage (20) comprenant des membranes perméables aux gaz, et une unité de désanionisation (22) avec au moins deux résines échangeuses d'ions, dont l'une est faible et l'autre est forte, l'unité de refroidissement étant conçue de telle sorte que la température de l'effluent ne dépasse pas 45 °C dans la section de dégazage.

4. Usine telle que revendiquée dans la revendication 3, **caractérisée en ce qu'**elle comprend, en amont dudit filtre mécanique (6), ou en aval de ladite unité de refroidissement (8), un moyen pour ajouter de l'oxydant (4).

5. Usine telle que revendiquée dans une ou plusieurs des revendications 3 à 4, **caractérisée en ce que** ladite unité d'adsorption comprend un groupe de filtres (12) contenant une substance adsorbante.

6. Usine telle que revendiquée dans une ou plusieurs des revendications 3 à 5, **caractérisée en ce qu'**elle comprend, à l'intérieur de l'usine même, un moyen pour le retraitement de l'eau de lavage desdits filtres (12).

7. Usine telle que revendiquée dans une ou plusieurs des revendications 3 à 6, **caractérisée en ce que** ladite unité de déminéralisation (16) comprend en outre une section de raffinage final (24).

8. Usine telle que revendiquée dans une ou plusieurs des revendications 3 à 7, **caractérisée en ce que** ladite unité de décationisation (18) comprend deux unités cationiques (18', 18") reliées en série et contenant chacune une résine, et/ou **en ce que** ladite unité de désanionisation (22) comprend deux unités anioniques (22', 22") reliées en série et contenant chacune une résine.

9. Usine telle que revendiquée dans la revendication 8, **caractérisée en ce qu'**une unité cationique (18') contient une résine cationique faible ou forte microporeuse ou en gel tandis que l'autre unité cationique (18") contient une résine cationique forte microporeuse ou en gel, et/ou **caractérisée en ce qu'**une unité anionique (22') contient une résine anionique faible microporeuse ou en gel, tandis que l'autre unité anionique (22") contient une résine anionique forte microporeuse ou en gel.

10. Usine telle que revendiquée dans une ou plusieurs des revendications 3 à 9, **caractérisée en ce que** ladite unité de désanionisation (22) comprend deux unités anioniques (22', 22") distinctes, qui contiennent deux résines distinctes, et **en ce que** la première unité anionique (22') contient une résine anionique faible, tandis que la seconde unité (22") contient une résine anionique forte.

11. Usine telle que revendiquée dans une ou plusieurs des revendications 3 à 10, **caractérisée en ce qu'**elle comprend, en aval de l'unité de décarbonatation (20), un épurateur (28) utilisant une substance alcaline.

12. Usine telle que revendiquée dans une ou plusieurs des revendications 3 à 11, **caractérisée en ce que** ladite section de raffinage (24) comprend au moins une unité parmi une unité constituée d'un mélange de résine échangeuse d'ions cationique avec une résine échangeuse d'ions anionique, et une unité constituée de matériaux ayant des sites actifs capables de fixer sélectivement les substances à éliminer.

13. Usine telle que revendiquée dans une ou plusieurs des revendications 3 à 12, **caractérisée en ce qu'**elle comprend un évaporateur/cristalliseur (26), en aval de ladite unité de décationisation (18) et/ou unité de désanionisation (22), pour évaporer/cristalliser l'éluat issu de la régénération de résine.

14. Usine telle que revendiquée dans une ou plusieurs des revendications 3 à 13, **caractérisée en ce qu'**elle comprend une cuve de stockage (10) en aval de ladite unité de refroidissement (8), et/ou de ladite unité d'adsorption (12), et/ou de l'une des sections (18, 20, 22, 24) de l'unité de déminéralisation (16).
